# EUROPÄISCHE PATENTSCHRIFT

(11) **EP 3 656 561 B1**
(45) Veröffentlichungstag und Bekanntmachung des Hinweises auf die Patenterteilung: **11.08.2021**
(21) Anmeldenummer: 19205599.4
(22) Anmeldetag: 28.10.2019
(51) Int. Cl.: B41F 33/00, G06K 9/03, G06T 5/00, G06T 7/00

(54) **SCHNELLE BILDENTZERRUNG FÜR BILDINSPEKTION**
FAST IMAGE RESTORATION FOR IMAGE INSPECTION
CORRECTION D'IMAGE RAPIDE POUR L'INSPECTION D'IMAGE

(30) Priorität: 26.11.2018 DE 102018220236
(43) Veröffentlichungstag der Anmeldung: 27.05.2020
(73) Patentinhaber: Heidelberger Druckmaschinen AG, 69115 Heidelberg (DE)
(72) Erfinder: Schumann, Frank, 69118 Heidelberg (DE)

(56) Entgegenhaltungen:
- DE-A1-102016 224 307
- DE-T2- 69 323 512
- DE-T2- 69 913 274

## Beschreibung

Die Erfindung beschäftigt sich mit einem Verfahren zur Bildinspektion von Druckerzeugnissen in einer Druckmaschine.

Die Erfindung liegt im technischen Gebiet der Qualitätskontrolle.

In der heutigen Druckindustrie wird insbesondere bei größeren Druckmaschinen die Qualitätskontrolle automatisiert über sogenannte Inline-Inspektionssysteme, im Weiteren als Bilderfassungssystem bezeichnet, durchgeführt. Inline bedeutet in diesem Fall, dass das Bilderfassungssystem, genauer gesagt die Kamera des Bilderfassungssystems, in der Druckmaschine angebracht ist. Sie wird dabei üblicherweise nach dem letzten Druckwerk oder, falls vorhanden, einer weiteren Nachbearbeitungsstation, wie zum Beispiel einem Lackwerk, angebracht und erfasst die von der Druckmaschine erzeugten Druckprodukte. Es kann sich dabei um eine Kamera oder auch um ein Kamerasystem mit mehreren Kameras handeln. Auch ist der Einsatz anderer Bildsensoren möglich. Vereinfachend wird im Folgenden jedoch von "Kamera" gesprochen. Die derart mittels der Kamera erzeugten digitalen Druckbilder werden dann in einem Bildverarbeitungsrechner mit entsprechenden Gutbildern des Drucksujets abgeglichen. Diese Gutbilder können dabei entweder aus den Vorstufendaten erstellt werden oder sie werden eingelernt. Einlernen bedeutet in diesem Fall, dass eine Reihe von Druckprodukten mit dem zu erzeugenden Drucksujet gedruckt und von der Kamera des Bilderfassungssystems erfasst wird. Diese Musterdrucke sollten möglichst fehlerfrei sein und werden daher nach Erfassen durch das Bilderfassungssystem als digitale Referenz im Bildverarbeitungsrechner als Gutbild hinterlegt. Im Fortdruckprozess werden dann durch die Kamera des Bilderfassungssystems das erzeugte Druckbild oder Teile davon erfasst und mit der digital eingelernten oder der aus den Vorstufendaten erstellten Gutbildreferenz abgeglichen. Werden dabei Abweichungen zwischen den im Fortdruck produzierten Druckprodukten und der digitalen Referenz festgestellt, so werden diese Abweichungen dem Drucker angezeigt, welcher dann entscheiden kann, ob diese Abweichungen akzeptabel sind oder ob die derart erzeugten Druckprodukte als Makulatur zu entfernen sind. Die als Makulatur erkannten Druckbögen können über eine Makulaturweiche ausgeschleust werden. Dabei ist es von enormer Wichtigkeit, dass sowohl die Gutbildreferenz fehlerfrei ist, als auch, dass das real Gedruckte und vom Bilderfassungssystem erfasste Druckbild auch wirklich dem realen gedruckten Druckbild entspricht. Fehler, die durch die Bildaufnahme entstehen, z. B. durch eine mangelnde Beleuchtung, eine unsaubere Linse der Kamera oder sonstige Einflussquellen, dürfen nicht den Inspektionsprozess negativ beeinflussen.

Ein sehr spezifisches Problem, welches die Inspektion eben in dieser Hinsicht negativ beeinflusst, stellen Unregelmäßigkeiten beim Drucksubstrattransport innerhalb der Druckmaschine dar. Das Bilderfassungssystem ist für eine gute Bildaufnahme darauf angewiesen, dass das transportierte Drucksubstrat an der Kamera des Bilderfassungssystems möglichst ruhig und gleichmäßig vorbeitransportiert wird. Besonders bei Bogendruckmaschinen ist dies sehr herausfordern. Es stellt hier ein bekanntes Problem dar, dass beim Transport von Druckbogen die Bogenhinterkante beim Transport über das Bogentransportleitblech in Schwingungen gerät, also hochschlägt -das Bogenende "flattert" sozusagen. Während dies für die Bilderfassung des Anfangs- und Mittelbereichs des Bogens kein Problem darstellt, werden zu untersuchende Druckbilder, die am Bogenende auf dem Druckbogen platziert sind, von diesem "Flattern" negativ beeinflusst. Denn dieses führt durch den sich verändernden Abstand von Bogenoberfläche zur Kamera zu nichtlinearen Verzerrung im erfassten Druckbild. Da diese Verzerrung in der digitalen Referenz natürlich nicht vorhanden ist, wird sie bei einem Abgleich des erfassten, aufgenommenen Druckbildes mit der digitalen Referenz als Druckfehler klassifiziert. Bei einer manuellen Überwachung des Bildinspektionsverfahrens durch einen Drucker, erkennt dieser natürlich, dass es sich dabei nicht um echte Druckfehler handelt und weiß diese Fehleranzeigen dementsprechend einzuordnen. Für eine vollständig automatisierte Bildinspektion wäre es jedoch notwendig, solche Falschpositivfehler oder Pseudofehler von vorneherein und schritthaltend mit der Druckgeschwindigkeit auszuschließen.

Aus dem Stand der Technik ist zu dieser Problematik z.B. die noch unveröffentlichte deutsche Patentanmeldung DE 10 2018 201794.8 zu nennen, welche ein Verfahren zur Bildinspektion von Druckerzeugnissen in einer Bedruckstoffe verarbeitenden Maschine mittels eines Rechners offenbart, wobei im Rahmen der Bildinspektion durch ein Bilderfassungssystem die produzierten Druckerzeugnissen mittels mindestens eines Bildsensors erfasst und digitalisiert werden, die so entstandenen erfassten, digitalen Druckbilder durch den Rechner mit einem digitalen Referenzbild abgeglichen werden, der Rechner das digitale Referenzbild vorher einer Glättung unterzieht, und im Falle von Abweichungen der erfassten, digitalen Druckbilder vom digitalen Referenzbild die fehlerhaft erkannten Druckerzeugnisse ausgeschleust werden und welches dadurch gekennzeichnet ist, dass vor der Glättung des digitalen Referenzbildes der Rechner einen Abgleich der erfassten, digitalen Druckbilder mit dem digitalen Referenzbild durchführt, das Ergebnis des Abgleichs auf Bildbereiche mit unscharfen Regionen im erfassten, digitalen Druckbild untersucht, geeignete Glättungsfaktoren für diese unscharfen Bildbereiche berechnet und die Glättung des digitalen Referenzbildes dann mit den berechneten, geeigneten Glättungsfaktoren für diese unscharfen Bildbereiche durchführt, sodass in diesen Bildbereichen das digitale Referenzbild eine vergleichbare Unschärfe aufweist, wie das erfasste, digitale Druckbild. Hier werden also typischerweise zwei Bilder die nicht exakt übereinstimmen mit Hilfe von sog. Keypoint-Entzerrungsalgorithmen entzerrt. Dabei wird in einem Sollbild eine definierte Anzahl von Eckpunkten gesucht. Diese Punkte werden dann ebenfalls in dem zu entzerrenden Bild gesucht. Anhand der Lageabweichungen der Eckpunkte können dann die Entzerrungsparameter errechnet werden. Die Suche der sog. Keypoints, also Eckpunkte, dauert allerdings sehr lange und liefert oft, z.B. im Fall von Bildern mit wenig Eckpunkten, keine guten Ergebnisse.

Ein weiterer Stand der Technik betrifft die ebenfalls noch unveröffentlichte deutsche Patentanmeldung DE 10 2017 220322.6, in der ein Verfahren zur Kompensation von Substratschrumpfung während eines Druckprozesses in einer Druckmaschine durch einen Rechner offenbart wird, welches die Schritte Erzeugen mehrerer Bildteile eines digital vorliegenden, zu produzierenden Druckbildes mit berücksichtigten Informationen über die Substratschrumpfung durch Unterteilung durch den Rechner, Unterteilung der jeweils erzeugten mehreren Bildteile in eine Anzahl von Datenblöcken durch den Rechner, Abspeichern von Ist-Positionen aller Datenblöcke im digitalen Druckbild durch den Rechner, Berechnen von Soll-Positionen aller Datenblöcke im digitalen Druckbild durch den Rechner mittels Auseinanderverschieben der Datenblöcke jeweils um ein Pixel, wobei ein-pixelbreite Lücken zwischen den Datenblöcken im digitalen Druckbild entstehen, Umkopieren der Datenblöcke im digitalen Druckbild gemäß den berechneten Soll-Positionen durch den Rechner, Berechnen von Positionen der entstandenen ein-pixelbreiten Lücken durch den Rechner, Auffüllen der ein-pixelbreiten Lücken durch digitale Bilddaten benachbarter Pixel durch den Rechner und Drucken des kompensierten, digitalen Druckbildes in der Druckmaschine, umfasst. Dieses Verfahren betrifft jedoch keine Bildinspektion. D.h. es wird kein Kamera- mit einem Referenzbild verglichen.

Aus der DE 69913 274 T2 ist zudem ein Verfahren zur automatischen Beurteilung der Druckqualität von Bildern, die auf einem verformbaren Träger gedruckt sind, wie Bogen aus Gummi, Kunststoff oder Papier bekannt, unter Verwendung einer optoelektronischen Vorrichtung zum Erfassen des Bildes und eines Bildverarbeitungssystems, welches die Verformung des Trägers durch Überlagerung des zu inspizierenden Bildes mit einem geeigneten Gitter misst und danach die Verschiebung der Gitterknoten in Bezug auf ihre Position auf einem als nicht verformtes Bezugsbild betrachteten Bild misst, und welches, bevor sie mit Schwellwerten verglichen werden, die zu inspizierenden Bilder verformt, so dass ihre Knoten dieselbe Position einnehmen wie die des Bezugsbilds.

Die Aufgabe der vorliegenden Erfindung besteht somit darin, ein Verfahren für die Bildentzerrung bei der Bildinspektion von Druckerzeugnissen zu offenbaren, welches bessere Ergebnisse liefert als die aus dem Stand der Technik bekannten Verfahren.

Gelöst wird diese Aufgabe durch ein Verfahren gemäß Anspruch 1, nämlich ein Verfahren zur Bildinspektion von Druckerzeugnissen in einer Bedruckstoffe verarbeitenden Maschine mittels eines Rechners, wobei im Rahmen der Bildinspektion durch ein Bilderfassungssystem die produzierten Druckerzeugnissen mittels mindestens eines Bildsensors erfasst und digitalisiert werden, die so entstandenen erfassten, digitalen Druckbilder durch den Rechner mit einem digitalen Referenzbild abgeglichen werden, der Rechner die digitalen Druckbilder vorher einer digitalen Entzerrung unterzieht, und im Falle von Abweichungen der erfassten, digitalen Druckbilder vom digitalen Referenzbild die fehlerhaft erkannten Druckerzeugnisse ausgeschleust werden, und welches dadurch gekennzeichnet ist, dass für die digitale Entzerrung der Rechner Druck- und Referenzbilder jeweils in Teilbilder aufteilt und die Teil-Druckbilder bzgl. ihrer Position im Druckbild so lange pixelweise verschiebt, bis sich eine minimale Differenz der Teil-Druckbilder zum jeweiligen Teil-Referenzbild ergibt. Der entscheidende Punkt des erfindungsgemäßen Verfahrens besteht dabei in der Zerlegung in Teilbilder. Dabei werden sowohl das erfasste und digitalisierte Druckbild als auch das abzugleichende Referenzbild in diese Teilbilder zerlegt. Dann erfolgt ein Abgleich zwischen Druck- und Referenzbild. Dabei ist es von besonderer Wichtigkeit, dass jeweils die einzelnen Teildruckbilder pixelweise im Gesamtdruckbild verschoben werden und zwar so lange, bis das entsprechend pixelweise verschobene Teildruckbild dem entsprechenden Teilreferenzbild am ehesten entspricht. Dies wird für alle Teildruckbilder durchgeführt. Am Ende sollte dann ein Gesamtdruckbild herauskommen, welches die geringsten Abweichungen zum Referenz- bzw. Gutbild aufweist. Diese Vorgehensweise bringt natürlich nur dann etwas, wenn sich im erfassten und digitalisierten Druckbild auch wirklich entsprechende Verzerrungen gebildet haben. Andernfalls würde man die einzelnen Teilbilder wie bei einem Puzzle auseinander reißen und somit die Qualität des digitalen Druckbildes eher verschlechtern. Bei vorliegenden Verzerrungen lassen sich diese jedoch aufgrund der pixelweisen Positionsanpassung der Teildruckbilder gut kompensieren. Daher wird aufgrund des Abgleiches auf minimale Differenz mit dem Teilreferenzbild auch sichergestellt, dass durch das Verschieben des Teildruckbildes in seiner Position im Gesamtdruckbild keine Verschlechterung der Qualität des digitalen Druckbildes, sondern eben immer nur eine Verbesserung erzeugt wird.

Vorteilhafte und daher bevorzugte Weiterbildungen des Verfahrens ergeben sich aus den zugehörigen Unteransprüchen sowie aus der Beschreibung mit den zugehörigen Zeichnungen.

Eine bevorzugte Weiterbildung des erfindungsgemäßen Verfahrens ist dabei, dass die Teilbilder für Druck- und Referenzbilder jeweils von identischer Größe sind. Der Abgleich zwischen eventuell positionsangepassten Teildruckbildern und Teilreferenzbildern funktioniert natürlich nur dann, wenn das Teildruckbild und das entsprechende Teilreferenzbild von identischer Größe sind. Dass jeweils die einzelnen Teilbilder innerhalb des Druckbildes und damit auch innerhalb des Referenzbildes gleich groß sind, ist dagegen keine unbedingt notwendige Voraussetzung. Das digitale Druckbild und damit auch das entsprechende Referenzbild können durchaus in unterschiedlich große Teilbilder unterteilt werden. Wichtig ist nur, dass das jeweilige Paar von Teildruckbild und entsprechendem Teilreferenzbild, welche miteinander abgeglichen werden, von gleicher Größe sind.

Eine weitere bevorzugte Weiterbildung des erfindungsgemäßen Verfahrens ist dabei, dass der Rechner die Druckbilder in einander jeweils überlappende Teilbilder aufteilt. Dies bedeutet im Endeffekt, dass das digitale Druckbild in Teilbilder mit quasi zwei Rahmen aufgeteilt wird. Zum einen existiert ein innerer Rahmen, welcher das eigentliche, mit dem exakt gleich großen Referenzteilbild abzugleichende Teildruckbild abgrenzt. Zum anderen existiert so etwas wie ein äußerer Rahmen, welcher in die benachbarten Teildruckbilder übergreift. So entsteht aus dem digitalen Gesamtdruckbild ein Satz von Teildruckbildern, welche mit ihrem äußeren Rahmen jeweils in die oben, unten, links, rechts benachbarten Teildruckbilder übergreifen. Dies ist deshalb notwendig, um das eigentliche Teildruckbild, welches vom inneren Rahmen abgedeckt wird und von der Größe her identisch mit dem Teilreferenzbild ist, um mehrere Pixel in alle Richtungen verschieben zu können. Ohne diesen überlappenden Anteil des jeweiligen Teildruckbildes würden sonst durch die Verschiebung Lücken im digitalen Gesamtdruckbild entstehen, welche beim Abgleich von Druckbild und Referenzbild zu vermeiden sind.

Eine weitere bevorzugte Weiterbildung des erfindungsgemäßen Verfahrens ist dabei, dass der Grad der Überlappung zwischen einzelnen Teilbildern der Druckbilder dem Grad der maximalen Positionspassung entspricht. Es versteht sich dabei von selbst, dass das Teildruckbild mit dem inneren Rahmen nur so weit pixelweise verschoben werden kann, wie im Teildruckbild weitere Bilddaten zwischen des innerem Rahmen und äußerem Rahmen durch die Überlappung zur Verfügung stehen. Verschiebt man um mehr als den Grad der Überlappung der entsprechend benachbarten Teildruckbilder, würden wieder Lücken im zu vergleichenden Teildruckbild auftreten.

Eine weitere bevorzugte Weiterbildung des erfindungsgemäßen Verfahrens ist dabei, dass der Rechner die pixelweise Positionspassung als Verschiebung des Teil-Druckbildes in X- und/oder Y-Richtung durchführt. Das heißt, die Verschiebung des Teildruckbildes im inneren Rahmen kann nach oben, unten, links oder rechts, oder anders ausgedrückt auch im Druck bzw. gegen als auch orthogonal zur Druckrichtung verschoben werden. Andere Verschiebungen, wie z.B. diagonal zur X- bzw. Y-Achse, sind zwar theoretisch auch möglich, werden aber weniger bevorzugt.

Eine weitere bevorzugte Weiterbildung des erfindungsgemäßen Verfahrens ist dabei, dass zur Positionspassung mit minimaler Differenz der Teil-Druckbilder zum jeweiligen Teil-Referenzbild der Rechner mehrere Verschiebungen durchführt, jeweils für jede Verschiebung des Teil-Druckbildes ein Differenzbild zum jeweiligen Teil-Referenzbild erstellt und dann das verschobene Teil-Druckbild auswählt, welches das Differenzbild mit der geringsten Differenzhöhe aufweist. Dies ist ein weiterer essentieller Teil des erfindungsgemäßen Verfahrens. Um die optimale Position des jeweiligen Teildruckbildes im inneren Rahmen zu finden, muss natürlich jeweils ein Abgleich zwischen Teildruckbild und Teilreferenzbild gemacht werden, dann mehrere Verschiebungen des Teildruckbildes durchgeführt werden und nach jeder Verschiebung ein erneuter Abgleich mit dem Teilreferenzbild durchgeführt werden. Damit kann der Rechner beurteilen, welche wie verschobene Variante des Teildruckbildes die beste für den endgültigen Abgleich mit dem Teilreferenzbild darstellt. Dabei sollten üblicherweise feste Regeln, wie ein bestimmtes Teildruckbild verschoben werden soll, festgelegt werden und dann für jedes Teildruckbild angewandt werden.

Eine weitere bevorzugte Weiterbildung des erfindungsgemäßen Verfahrens ist dabei, dass der Rechner die Berechnung der geringsten Differenzhöhe im Differenzbild durch Anwendung von Schwellwerten durchführt und die Differenzhöhe jedes verschobenen Teil-Druckbildes in einer Matrix abspeichert. Die Berechnung der geringsten Differenzhöhe kann dabei so durchgeführt werden, dass der Rechner festgesetzte Schwellwerte anwendet und bei Unterschreiten eines entsprechenden Schwellwertes das jeweilige Differenzbild als solches mit der geringsten Differenzhöhe kennzeichnet. Die Ergebnisse werden dann in einer Matrix abgespeichert, um eine weitere Auswertung über die Effizienz des erfindungsgemäßen Verfahrens durchführen zu können.

Eine weitere bevorzugte Weiterbildung des erfindungsgemäßen Verfahrens ist dabei, dass der Rechner zur Durchführung der Bildinspektion mit entzerrtem Druckbild die Teil-Druckbilder mit der geringsten Differenzhöhe an ihre jeweilige Sollposition im Druckbild kopiert und das so erhaltene Druckbild für die Bildinspektion verwendet. Für die endgültige Bildinspektion wird am Ende das jeweilige Gesamtdruckbild aus den entsprechenden Teildruckbildern mit der geringsten Differenz zum jeweiligen Teilreferenzbild wieder zusammengesetzt und mit diesem Gesamtdruckbild dann die Bildinspektion in Form des Abgleichs zwischen Gesamtdruckbild und Referenzbild durchgeführt.

Alternativ können in einer weiteren bevorzugten Weiterbildung des erfindungsgemäßen Verfahrens natürlich auch zur Durchführung der Bildinspektion mit entzerrtem Druckbild die Teildruckbilder mit der jeweiligen geringsten Differenzhöhe direkt mit ihren jeweiligen Teilreferenzgegenstücken abgeglichen werden. Für den Fall, dass das digital erfasste Gesamtdruckbild in mehreren Kameraausschnitten vorliegt, kann zudem auch in einem Zwischenschritt das jeweilige Kameraausschnittbild erfindungsgemäß bearbeitet, d.h. entzerrt und/oder inspiziert werden. In diesem Fall müsste auch das Referenzbild in entsprechende Ausschnitte zerlegt werden, um den erfindungsgemäßen Entzerrungsvorgang durchführen zu können.

Eine weitere bevorzugte Weiterbildung des erfindungsgemäßen Verfahrens ist dabei, dass die Teilbilder eine vieleckige Form aufweisen, insbesondere die eines Rechteckes, bzw. Quadrates oder eines Dreieckes. Die Form der Teilbilder ist dabei sehr vielgestaltig. Am ehesten haben sich vieleckige Formen, insbesondere Quadrate, als praktisch erwiesen. Jedoch sind auch andere Formen wie die eines anders geformten Rechteckes oder eines Dreieckes möglich. Da das gesamte digitale Druckbild zerlegt werden soll, sind runde Formen weniger geeignet.

Die Erfindung als solche sowie konstruktiv und/oder funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Figuren zeigen:
- Figur 1:: ein Beispiel eines Bilderfassungssystems in einer Bogenoffset-Druckmaschine
- Figur 2:: ein Beispiel für die Aufteilung eines Referenzbildes und eines Druckbildes in Teilbilder/Kacheln
- Figur 3:: ein Beispiel für die pixelweise Verschiebung des Teildruckbildes
- Figur 4:: die Differenzbildung zwischen Teil-Druckbild und Teil-Referenzbild
- Figur 5:: ein Beispiel des zusammengesetzten Druckbildes
- Figur 6:: einen verbesserten Algorithmus zur Inspektion von mehreren Kamera-Teilbildern/Kacheln
- Figur 7:: den Beginn des verbesserten Algorithmus'
- Figur 8:: den Abschluss des verbesserten Algorithmus'
- Figur 9:: schematisch den Ablauf des erfindungsgemäßen Verfahrens

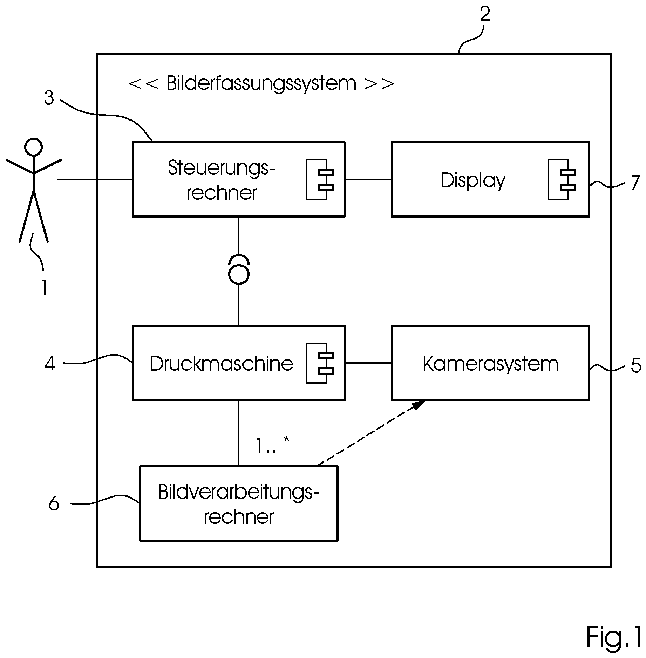

Figur 1 zeigt ein Beispiel für ein Bilderfassungssystem 2, welches das erfindungsgemäße Verfahren einsetzt. Es besteht aus mindestens einem Bildsensor 5, üblicherweise einer Kamera 5, welche in die Bogen-Druckmaschine 4 integriert ist. Die mindestens eine Kamera 5 nimmt die von der Druckmaschine 4 erzeugten Druckbilder auf und sendet die Daten an einen Rechner 3, 6 zur Auswertung. Dieser Rechner 3, 6 kann ein eigener separater Rechner 6 sein, z.B. ein oder mehrere spezialisierte Bildverarbeitungsrechner 6, oder auch mit dem Steuerungsrechner 3 der Druckmaschine 4 identisch sein. Mindestens der Steuerungsrechner 3 der Druckmaschine 4 besitzt ein Display 7, auf welchem die Ergebnisse der Bildinspektion dem Anwender 1 angezeigt werden.

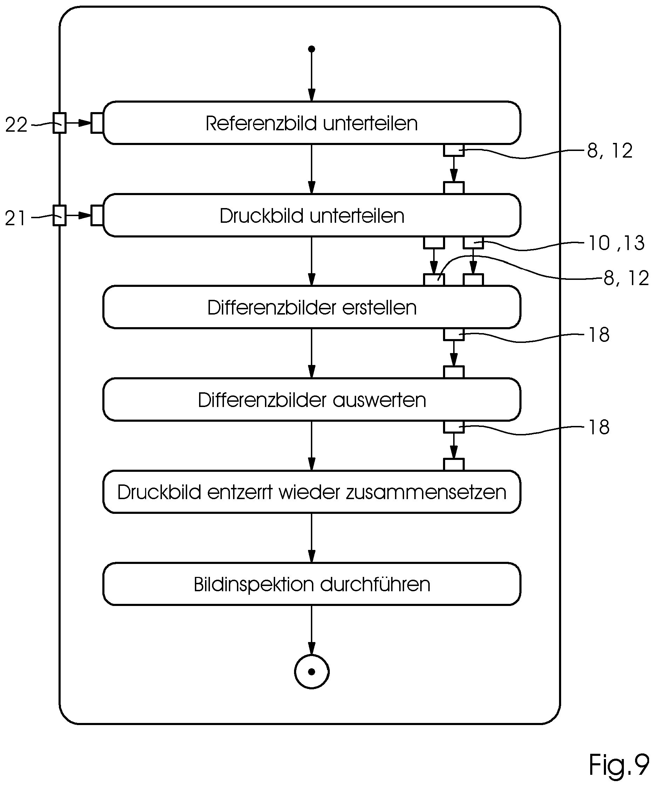

Das erfindungsgemäße Verfahren selbst ist bezüglich seines Ablaufes schematisch in Figur 9 in einer bevorzugten Ausführungsvariante dargestellt. Das digitale Vorstufenbild als Referenzbild 22 wird dabei aus der gerenderten Druckvorlagen-PDF der Vorstufe erstellt. Das Druckbild 21 dagegen ist logischerweise das in der Druckmaschine 4 mit Kameras 5 aufgenommene Kamerabild 21 des gedruckten Bogens. Bei der Bildinspektion für Druckmaschinen 4 ist es häufig so, dass die Referenzbilder 22 nicht exakt mit den Kamerabildern 21 übereinstimmen. Ursachen dafür sind Kameraverzerrungen und Bogenverzerrungen, z.B. durch Bogenhochschlagen oder Bogenabheben. Typischerweise ist eine Entzerrung der Kamerabilder 21 notwendig, damit die anschließende Bildinspektion vernünftig funktioniert. Dieser Vorgang muss schritthaltend zur Druckgeschwindigkeit erfolgen.

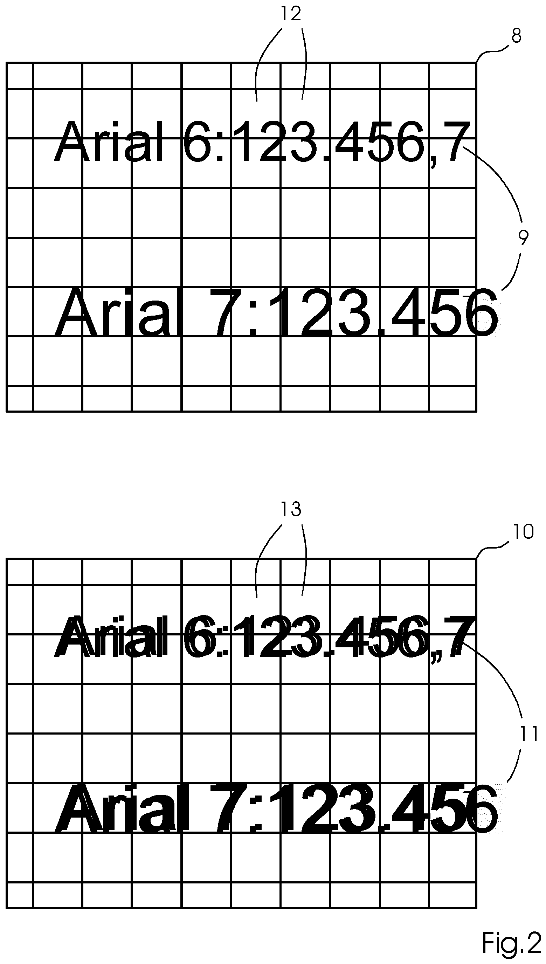

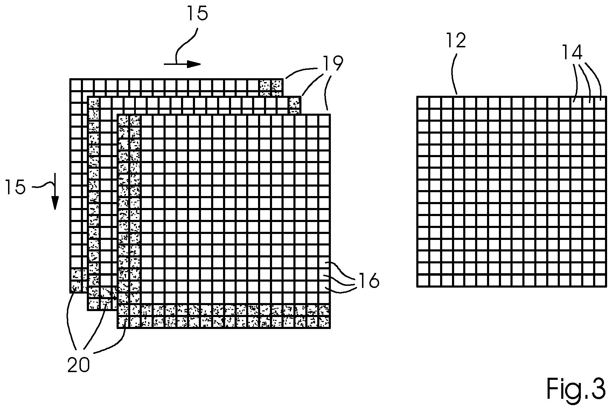

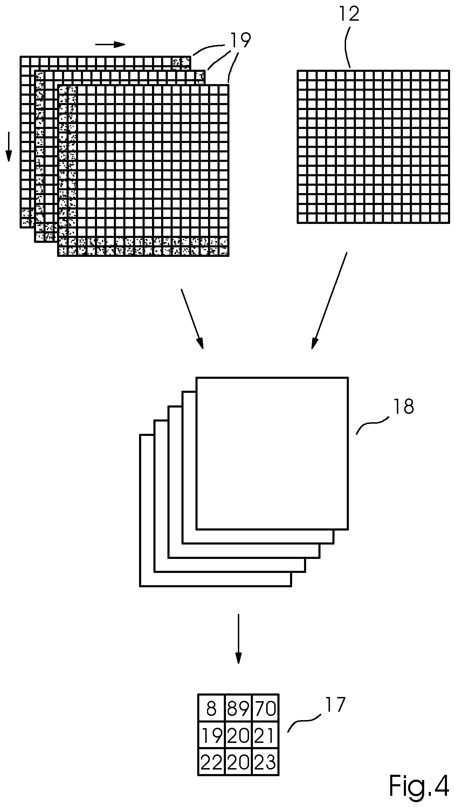

Der Algorithmus des Verfahrens wird im Rechner 3, 6 folgendermaßen umgesetzt: Beide Bilder 21, 22 werden gleichermaßen in Ausschnitte 8, 10 unterteilt. Dies geschieht vor allem deshalb, weil mehrere Kameras 5 verwendet werden, die dann nur einen Teil 10 des Gesamt-Druckbildes 21 erfassen. Die Ausschnitte 8, 10 von Gesamt-Druckbild 21 und Referenzbild 22 werden dann weiter in quadratische Teilbilder 12, 13 unterteilt, in sogenannte Kacheln 12, 13, wie dies in Figur 2 entsprechend eines Beispiels dargestellt ist. Gut ist hier neben den Kacheln 12, 13 auch der eigentlich Nutzen 9, 11 in Form eines Schriftzuges zu erkennen. Im unteren Teil von Figur 2, welcher den erfassten Ausschnitt 10 des Druckbildes 21 darstellt, kann man nun sehen, wie der digitale Nutzen 11 im erfassten Ausschnitt 10 verzerrt ist. Ein sinnvoller Abgleich mit dem Ausschnitt 8 des Referenzbildes 22 im Rahmen der Bildinspektion ist damit nur schlecht möglich. Für jede dieser Kacheln 12, 13 wird daher nun versucht durch pixelweise Verschiebung 15 der Kacheln 12, 13 im Teil-Kamerabild 13 eine optimale Position relativ von Referenzausschnittbild 8 und Kameraausschnittbild 10 zueinander zu finden. Dies zeigt für das genannte Beispiel Figur 3, wo links mehrere quadratische Teil-Kamerabilder 19 mit jeweils pixelweiser Verschiebung 15 zu sehen sind, während rechts das quadratische Teil-Vorstufen-/Referenzbild 12 zu sehen ist. Sowohl für die quadratischen Teil-Kamerabilder 19 als auch für die quadratischen Teil-Vorstufenbilder 12 sind jeweils die einzelnen Pixel 14, 16, welche zur Darstellung der digitalen Teil-Bilder 12, 19 benötigt werden angezeigt. Wichtig ist dabei zu beachten, dass für das zu untersuchende Teil-Kamerabild 13 während der Verschiebung quasi zwei "Kacheln" existieren: Eine "innere Kachel", in Figur 3 unschraffiert dargestellt, die das zu verschiebende Teilbild 13 darstellt und welche von gleicher Größe ist, wie die entsprechende Kachel 12 des Referenzausschnittbildes 8; und eine "äußere Kachel" welche neben der Inneren noch einen Überlappungsbereich 20, in Figur 3 schraffiert dargestellt, beinhaltet. Dieser Überlappungsbereich 20 samt äußerer Kachel existiert dabei nur im Kameraausschnittbild 10, aber nicht im Referenzausschnittbild 8. Die pixelweise Verschiebung 15 kann dabei nur in diesem Überlappungsbereich 20 stattfinden, da sonst Bildlücken entstehen würden. Dann wird für die unterschiedlichen Verschiebungen in x-/y-Richtung 15 jeweils ein Differenzbild 18 erstellt und die Höhe der Differenz als Qualitätsmerkmal für die Lage an dieser Position in einer Ergebnis-Matrix 17 gespeichert, so wie in Figur 4 gezeigt. Die Position mit der geringsten Differenz merkt sich der Rechner 3, 6.

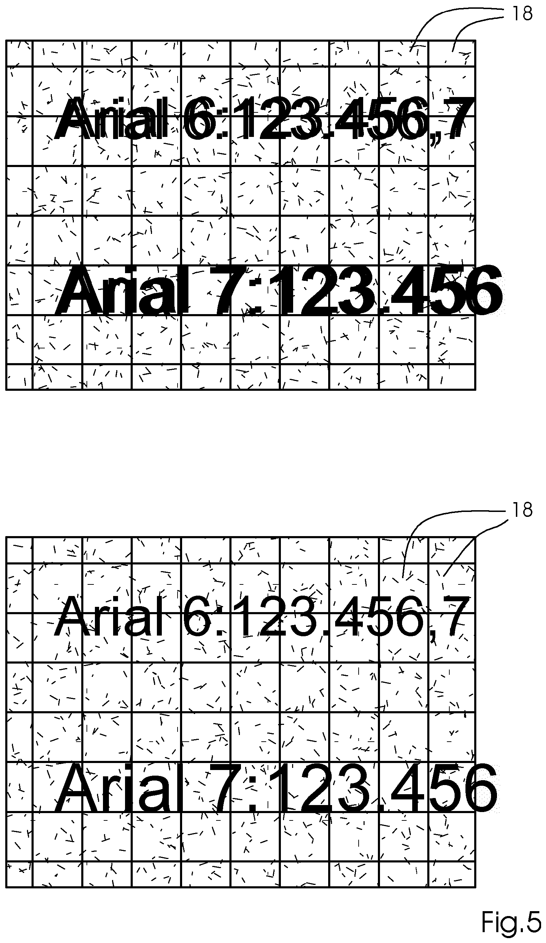

In einem nachfolgenden Schritt wird nun wieder Kachel 13 für Kachel 13 ein entzerrtes Druckausschnittbild 10 zusammengesetzt, indem der Rechner 3, 6 jeweils die Kachelposition mit der geringsten Differenz wählt und sie an die betreffende Sollposition kopiert. Figur 5 zeigt das Ergebnis eines Druckausschnittbildes 10, welches hier beispielhaft zur besseren Verdeutlichung aus Differenzbildern 18 aus quadratischen Teil-Vorstufen-/ Teil-Kamerabildern 12, 13 besteht. Das obere Bild besteht aus Differenzbildern 18 ohne erfindungsgemäße Verschiebung 15, während unten das untere Bild aus Teilbildern 18 mit pixelweiser Verschiebung 15 besteht. Man kann gut den Unterschied hinsichtlich verbleibender Verzerrungen im nicht bearbeiteten Differenzbild erkennen.

In einer alternativen Ausführungsform können die Teilbilder, also Kacheln, 12, 13 dabei auch andere Formen als Quadrate, z.B. Dreiecke oder andere Vielecke annehmen.

Beide Prozessschritte sind hochgradig parallelisierbar. Jede Kachel 12, 13 kann in einem eigenständigen Prozess berechnet werden. Wird bei einem Einprozessor-Computersystem ein Bild 8, 10 in 1000 Kacheln aufgeteilt, so müssen diese Kacheln 12, 13 nacheinander berechnet werden. Bei modernen Grafikkarten mit z.B. 1000 Prozessoren ist es durch die Parallelisierung möglich den gesamten Prozess in nur einem einzigen Schritt zu berechnen. Hier ist eine Beschleunigung um den Faktor 1000 und mehr möglich, was gegenüber den bisherigen Methoden aus dem Stand der Technik eine bedeutende Performancesteigerung für den Entzerrungsprozess bedeutet.

Nach der Entzerrung kann nun die eigentliche Bildinspektion durchgeführt werden. Es gibt hierfür drei Ansätze:
Fall 1: Der Abgleich zur Inspektion findet zwischen den entzerrten Kacheln 13 des Kameraausschnittbildes 10 und den Kacheln 12 des Referenzausschnittbildes 8 statt.
Fall 2: Die Inspektion erfolgt nach der Entzerrung zwischen dem Kameraausschnittbild 10 und dem Referenzausschnittbild 8
Fall 3: Der Abgleich findet zwischen dem entzerrten Gesamt-Druckbild 24, welches aus den entzerrten Kameraausschnittbildern 10, 10a, 10b zusammengesetzt wurde, und dem Gesamt-Referenzbild statt.

Beim ersten Fall entsteht der Nachteil, dass die Inspektion in den Überlappungsbereichen 20 doppelt ausgeführt wird. Ein weiteres Problem liegt darin, Fehler die im Überlappungsbereich 20 liegen und die dadurch geteilt wurden wieder sinnvoll zusammenzufügen. Beides führt zu verlängerten Inspektionslaufzeiten.

Im zweiten Fall müssen zeitlich aufeinanderfolgende Schritte ausgeführt werden, was zu verlängerten Inspektionslaufzeiten führt. Dies gilt auch für den dritten Fall.

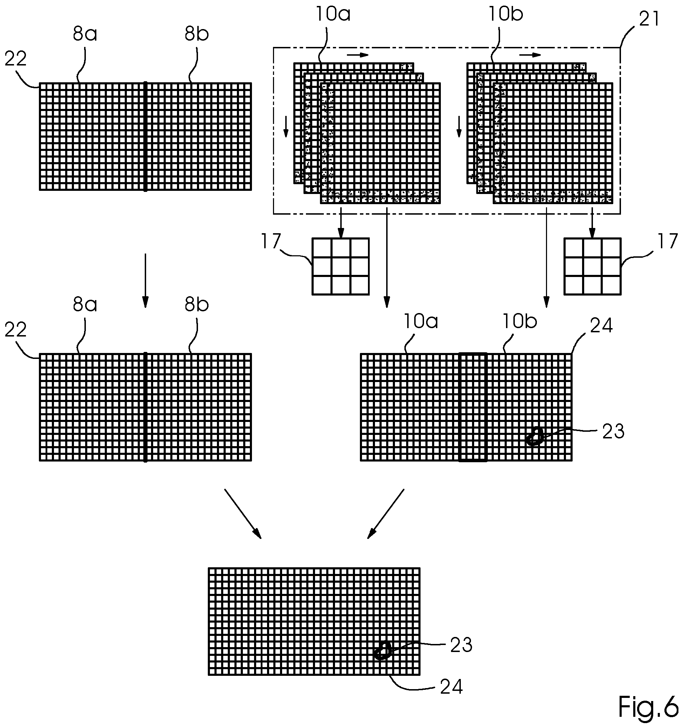

Um dies zu vermeiden gibt es für das erfindungsgemäße Verfahren ein weiteres bevorzugtes Ausführungsbeispiel, welches die Laufzeit verringert und in Figur 6 schematisch dargestellt ist.

Dabei wird auch hier das Referenzausschnittbild 8 und das Kameraausschnittbild 10 in eine Vielzahl von Kacheln 12, 13 unterteilt, wie es in Figur 2 gezeigt wird. Auch hier werden die Kacheln 13 des Kameraausschnittbildes 10 an den Kacheln 12 des Referenzausschnittbildes 8 ausgerichtet. Damit wird wie gehabt die Bogenentzerrung durchgeführt. Damit ist der Vorgang für den aktuellen Ausschnitt 10a des Druckbildes 21 abgeschlossen.

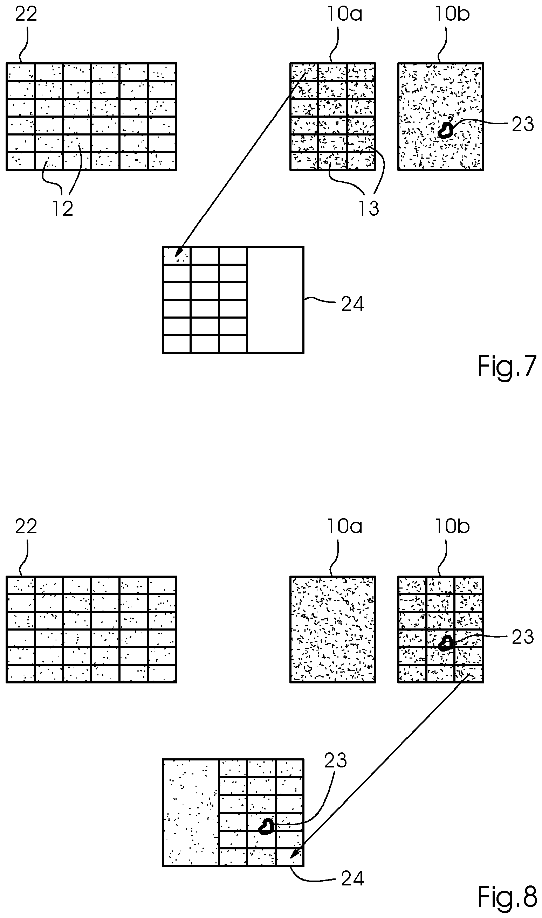

In den meisten Fällen bildet der aktuelle Kameraausschnitt 10a jedoch nicht das Gesamtdruckbild 21 ab. Falls ein weiter Kameraausschnitt 10b existiert, wird nun dieser entsprechend genauso entzerrt. Die erste Kachel 13 des entzerrten Druckbildes 10a wird nun direkt wieder im nun entzerrten Gesamt-Druckbild 24 platziert und nicht wie bei den vorherigen Ausführungsvarianten auf einem separaten Kameraausschnitt 10a. Gleiches geschieht mit den restlichen Kacheln 13. Diese werden in gleicher Weise direkt auf dem Gesamt-Druckbild 24 platziert, so dass am Ende des Entzerrungsvorgangs ein entzerrtes und zusammengefügtes Kameravollbild 24 entsteht. Dieser Zustand wird in Figur 7 für den Beginn dieser Ausführungsvariante bei Kameraausschnitt 10a und in Figur 8 für das Ende bei Kameraausschnitt 10b dargestellt. Das Gesamt-Referenzbild 22 wird entsprechend in seine Referenzausschnittbilder 8a und 8b zerlegt.

Mit diesem Vorgehen lassen sich die Inspektionslaufzeiten bei mehreren Ausschnitten 8, 8a, 8b sowie 10, 10a, 10b deutlich verringern. Mit diesem Gesamt-Druckbild 24 kann nun die eigentliche Bildinspektion zur Ermittlung von vorhandenen Bildfehlern 23 durchgeführt werden. Ein beispielhafter Bildfehler 23 ist in den Figuren 6, 7 und 8 angedeutet.

### Bezugszeichenliste

- 1: Anwender
- 2: Bilderfassungssystem
- 3: Steuerungsrechner
- 4: Druckmaschine
- 5: Bildsensor
- 6: Bildverarbeitungsrechner
- 7: Display
- 8, 8a, 8b: digitaler Ausschnitt aus Vorstufenbild (Referenzbild)
- 9: digitaler Nutzen im Ausschnitt des Vorstufenbildes
- 10, 10a, 10b: erfasster, Ausschnitt aus digitalem Druckbild (Kamerabild)
- 11: digitaler Nutzen im Ausschnitt des erfassten Druckbildes
- 12: quadratisches Teil-Vorstufenbild (Kachel)
- 13: quadratisches Teil-Kamerabilder (Kachel)
- 14: Pixel im Teil-Vorstufenbild
- 15: pixelweise Verschiebung in x-/y-Richtung
- 16: Pixel im Teil-Kamerabild
- 17: Ergebnismatrix
- 18: Differenzbilder aus quadratischen Teil-Vorstufen-/ Teil-Kamerabild
- 19: pixelweise verschobene Teil-Kamerabilder
- 20: Überlappungsbereich
- 21: verzerrtes Gesamt-Druckbild
- 22: Gesamt-Referenzbild
- 23: Bildfehler
- 24: entzerrtes Gesamt-Druckbild

## Patentansprüche

1. Verfahren zur Bildinspektion von Druckerzeugnissen in einer Bedruckstoffe verarbeitenden Maschine (4) mittels eines Rechners (3, 6), wobei im Rahmen der Bildinspektion durch ein Bilderfassungssystem (1) die produzierten Druckerzeugnisse mittels mindestens eines Bildsensors (5) erfasst und digitalisiert werden, die so entstandenen erfassten, digitalen Druckbilder (21) durch den Rechner (3, 6) mit einem digitalen Referenzbild (22) abgeglichen werden, der Rechner (3, 6) die erfassten, digitalen Druckbilder (21) vorher einer digitalen Entzerrung unterzieht, und im Falle von Abweichungen der erfassten, digitalen und entzerrten Druckbilder (24) vom digitalen Referenzbild (22) die fehlerhaft erkannten Druckerzeugnisse ausgeschleust werden,
**dadurch gekennzeichnet,**
**dass** für die digitale Entzerrung der Rechner (3, 6) Druck- und Referenzbilder (21, 22) jeweils in Teilbilder (12, 13) aufteilt und die Teil-Druckbilder (13) bzgl. ihrer Position im Druckbild (21, 24) so lange pixelweise verschiebt, bis sich eine minimale Differenz der Teil-Druckbilder (13) zum jeweiligen Teil-Referenzbild (12) ergibt.

2. Verfahren nach Anspruch 1,
**dadurch gekennzeichnet,**
**dass** die Teilbilder (12, 13) für Druck- und Referenzbilder (21, 22) jeweils von identischer Größe sind.

3. Verfahren nach Anspruch 2,
**dadurch gekennzeichnet,**
**dass** der Rechner (3, 6) die Druckbilder (21) in einander jeweils überlappende Teilbilder (13) aufteilt.

4. Verfahren nach Anspruch 3,
**dadurch gekennzeichnet,**
**dass** der Grad der Überlappung zwischen einzelnen Teilbildern (13) der Druckbilder (21) dem Grad der maximalen Positionspassung entspricht.

5. Verfahren nach einem der vorherigen Ansprüche,
**dadurch gekennzeichnet,**
**dass** der Rechner (3, 6) die pixelweise Positionspassung als Verschiebung des Teil-Druckbildes (13) in X- und/oder Y-Richtung durchführt.

6. Verfahren nach Anspruch 5,
**dadurch gekennzeichnet,**
**dass** zur Positionspassung mit minimaler Differenz der Teil-Druckbilder (13) zum jeweiligen Teil-Referenzbild (12) der Rechner (3, 6) mehrere Verschiebungen (15) durchführt, jeweils für jede Verschiebung (15) des Teil-Druckbildes (13) ein Differenzbild (18) zum jeweiligen Teil-Referenzbild (12) erstellt und dann das verschobene Teil-Druckbild (13) auswählt, welches das Differenzbild (18) mit der geringsten Differenzhöhe aufweist.

7. Verfahren nach Anspruch 6,
**dadurch gekennzeichnet,**
**dass** der Rechner (3, 6) die Berechnung der geringsten Differenzhöhe im Differenzbild (18) durch Anwendung von Schwellwerten durchführt und die Differenzhöhe jedes verschobenen Teil-Druckbildes (13) in einer Ergebnis-Matrix (17) abspeichert.

8. Verfahren nach einem der vorherigen Ansprüche 6 bis 7,
**dadurch gekennzeichnet,**
**dass** der Rechner (3, 6) zur Durchführung der Bildinspektion mit entzerrtem Druckbild die Teil-Druckbilder (13) mit der geringsten Differenzhöhe an ihre jeweilige Sollposition im erfassten, digitalen und entzerrten Druckbild (24) kopiert und das so erhaltene erfasste, digitale und entzerrte Druckbild (24) für die Bildinspektion verwendet.

9. Verfahren nach einem der vorherigen Ansprüche 6 bis 7,
**dadurch gekennzeichnet,**
**dass** der Rechner (3, 6) zur Durchführung der Bildinspektion mit entzerrtem Druckbild die Teil-Druckbilder (13) mit der geringsten Differenzhöhe mit den entsprechenden Teil-Referenzbildern (12) abgleicht und dann die Teil-Druckbilder (13) an ihre jeweilige Sollposition im erfassten, digitalen und entzerrten Druckbild (24) kopiert.

10. Verfahren nach einem der vorherigen Ansprüche,
**dadurch gekennzeichnet,**
**dass** die Teilbilder (12, 13) eine vieleckige Form aufweisen, insbesondere die eines Rechteckes, bzw. Quadrates oder eines Dreieckes.

## Claims

1. Method of inspecting images on printed products in a machine (4) for processing printing materials by means of a computer (3, 6) wherein the produced printed products are recorded and digitized in the course of the image inspection process by an image recording system (1) using at least one image sensor (5), the recorded digital printed images (21) created in this way are compared to a digital reference image (22) by the computer (3, 6), the computer (3, 6) previously subjects the recorded digital printed images (21) to a digital process of eliminating distortions, and wherein in a case in which deviations occur between the distortion-free recorded digital printed images (24) and the digital reference image (22), the printed products that have been identified as defective are removed,
**characterized**
**in that** for the process of digitally eliminating distortions, the computer (3, 6) subdivides the printed and reference images (21, 22) into image parts (12, 13) and shifts the printed image parts (13) pixel by pixel in terms of their position in the printed image (21, 24) until a minimum difference is achieved between the printed image parts (13) and the respective reference image part (12).

2. Method according to claim 1,
**characterized**
**in that** the respective image parts (12, 13) of the printed and reference images (21, 22) are of identical sizes.

3. Method according to claim 2,
**characterized**
**in that** the computer (3, 6) subdivides the printed images (21) into respective image parts (13) that overlap one another.

4. Method according to claim 3,
**characterized**
**in that** the degree of overlap between individual image parts (13) of the printed images (21) corresponds to the degree of the maximum position adaptation.

5. Method according to any one of the preceding claims,
**characterized**
**in that** the computer (3, 6) implements the pixel-by-pixel position adaptation as a shifting of the printed image part (13) in the X and/or Y directions.

6. Method according to claim 5,
**characterized**
**in that** for position adaptation with a minimum difference between the printed image parts (13) and the respective reference image parts (12), the computer (3, 6) makes multiple shifts (15), creates a differential image (18) relative to the respective reference image part (12) for every shift (15) of the printed image part (13), and then selects the shifted printed image part (13) whose differential image (18) has the smallest difference.

7. Method according to claim 6,
**characterized**
**in that** the computer (3, 6) calculates the smallest difference in the differential image (18) by applying thresholds and saves the difference of every shifted printed image part (13) in a results matrix (17).

8. Method according to any one of claims 6 to 7,
**characterized**
**in that** to implement the image inspection process with a distortion-free printed image, the computer (3, 6) copies the printed image parts (13) with the smallest difference to the respective target position in the recorded digital distortion-free printed image (24) and uses the recorded digital and distortion-free printed image (24) that has been created in this way for the image inspection process.

9. Method according to any one of the preceding claims 6 to 7,
**characterized**
**in that** to carry out the image inspection process with a distortion-free printed image, the computer (3, 6) compares the printed image parts (13) that have the smallest difference to the corresponding reference image parts (12) and then copies the printed image parts (13) to their respective target positions in the recorded digital and distortion-free printed image (24).

10. Method according to any one of the preceding claims,
**characterized**
**in that** the image parts (12, 13) have a polygonal shape, in particular the shape of a rectangle/square or triangle.

## Revendications

1. Procédé d'inspection des images des imprimés dans une machine (4) traitant des supports d'impression au moyen d'un ordinateur (3, 6), pour lequel, dans le cadre de l'inspection de l'image par un système de détection d'image, les imprimés produits sont enregistrés et numérisés (1) au moyen d'au moins un détecteur d'image (5), les images d'impression numériques enregistrées (21) ainsi produites sont comparées par l'ordinateur (3, 6) à une image de référence numérique (22), l'ordinateur (3, 6) soumet les images d'impression (21) numériques enregistrées au préalable à une rectification numérique et, en cas d'écarts des images d'impression (24) enregistrées, numériques et rectifiées par rapport à l'image de référence (22) numérique, les imprimés reconnus défectueux sont rejetés,
**caractérisé en ce**
**que**, pour la rectification numérique, l'ordinateur (3, 6) divise les images d'impression et de référence (21, 22) respectivement en images partielles (12, 13) et décale pixel par pixel la position des images d'impression partielles (13) dans l'image d'impression (21, 24) jusqu'à obtenir une différence minimale entre les images d'impression partielles (13) et l'image de référence partielle respective (12).

2. Procédé selon la revendication 1,
**caractérisé en ce**
**que** les images partielles (12, 13) pour les images d'impression et de référence (21, 22) sont respectivement de taille identique.

3. Procédé selon la revendication 2,
**caractérisé en ce**
**que** l'ordinateur (3, 6) divise les images imprimées (21) en images partielles respectives se chevauchant (13).

4. Procédé selon la revendication 3,
**caractérisé en ce**
**que** le degré de chevauchement entre les images partielles individuelles (13) des images imprimées (21) correspond au degré d'ajustement maximal de la position.

5. Procédé selon l'une des revendications précédentes,
**caractérisé en ce**
**que** l'ordinateur (3, 6) réalise l'ajustement de position pixel par pixel sous la forme d'un décalage de l'image d'impression partielle (13) dans la direction X et/ou Y.

6. Procédé selon la revendication 5,
**caractérisé en ce**
**que**, pour l'ajustement de position avec une différence minimale des images d'impression partielle (13) par rapport à l'image de référence partielle respective (12), l'ordinateur (3, 6) effectue plusieurs décalages (15), produit à chaque fois une image différentielle (18) par rapport à l'image de référence partielle respective (12) pour chaque décalage (15) de l'image d'impression partielle (13) et sélectionne ensuite l'image d'impression partielle décalée (13) qui présente l'image différentielle (18) ayant la plus petite hauteur différentielle.

7. Procédé selon la revendication 6,
**caractérisé en ce**
**que** l'ordinateur (3, 6) effectue le calcul de la plus petite hauteur différentielle dans l'image différentielle (18) en appliquant des valeurs de seuil et mémorise la hauteur différentielle de chaque image d'impression partielle décalée (13) dans une matrice de résultats (17).

8. Procédé selon l'une des revendications précédentes 6 à 7,
**caractérisé en ce**
**que**, pour effectuer l'inspection d'image avec une image d'impression rectifiée, l'ordinateur (3, 6) copie les images d'impression partielles (13) avec la hauteur différentielle la plus faible à leur position de consigne respective dans l'image d'impression enregistrée, numérique et rectifiée (24) et utilise l'image d'impression enregistrée, numérique et rectifiée (24) ainsi obtenue pour l'inspection d'image.

9. Procédé selon l'une des revendications précédentes 6 à 7,
**caractérisé en ce**
**que** pour effectuer l'inspection d'image avec l'image d'impression rectifiée, l'ordinateur (3, 6) compare les images d'impression partielles (13) avec la hauteur différentielle la plus faible avec les images de référence partielles correspondantes (12) et copie ensuite les images d'impression partielles (13) à leur position de consigne respective dans l'image d'impression enregistrée, numérique et rectifiée (24).

10. Procédé selon l'une des revendications précédentes,
**caractérisé en ce**
**que** les images partielles (12, 13) présentent une forme polygonale, notamment celle d'un rectangle, d'un carré, ou d'un triangle.
